# EUROPEAN PATENT APPLICATION

(11) **EP 1 850 262 A2**
(43) Date of publication of application: **31.10.2007**
(21) Application number: 06254713.8
(22) Date of filing: 11.09.2006
(51) Int. Cl.: G06F 21/24

(54) **Data protection system, method, and program**

(30) Priority: 28.04.2006 JP 2006124791
(71) Applicant: Fujitsu Ltd., Kawasaki-shi, Kanagawa 211-8588 (JP)
(72) Inventor: Kameyama, Hiroaki, Kawasaki-shi Kanagawa 211-8588 (JP); Satou, Yuichi,, Kawasaki-shi Kanagawa 211-8588 (JP); Sazawa, Shinichi, Kawasaki-shi Kanagawa 211-8588 (JP)
(74) Representative: Mohun, Stephen John

(57) **Abstract**

The data dividing unit divides data into n pieces. An encoding unit generates m pieces of encoded data composed of a set of a bitmap matrix specifying a plurality pieces of divided data for obtaining exclusive OR (XOR) and exclusive OR data including exclusive OR of the plurality pieces of divided data specified by the bitmap matrix, wherein m is equal to or more than a dividing number n and according to redundancy. A distributed saving unit distributes and saves the m pieces of encoded data to and in storage devices at two or more locations and m or less locations. A decoding unit restores the original data by retrieving restorable k or more pieces of the encoded data among the distributed and saved m pieces of encoded data and subjecting the bitmap matrix of the retrieved encoded data to conversion into a unit matrix.

## Description

This application is a priority based on prior application No.JP 2006-1247915, filed April 28, 2006, in Japan.

### BACKGROUND OF THE INVENTION

### 1. Field of the Invention

The present invention relates to a data protection system, method, and program for dividing important information such as personal information, distributing and saving it to and in storage devices such as network storage devices and USB memories, and retrieving and restoring it when needed; and particularly relates to a data protection system, method, and program which enable leakage prevention and information restoration even if part of the information is stolen by redundantly encoding and distribute and save the information.

### 2. Description of the Related Arts

Conventionally; in order to safely maintain important information such as technical information or personal information, encryption algorithms using keys have been used. Typical key encryption methods include, for example, DES (Data Encryption Standard) and AES (Advanced Encription Standard) of common key encryption methods and RSA (Rivest,Shamir and Adleman) of a public key encryption method. However, such conventional encryption algorithms using keys cannot be assumed to be safe since decryption is possible by trying every key when the performance of computing machines is high. In addition, they are also problematic in the point that large cost is taken for managing keys. On the other hand, there is a data protection technique called a secret information distribution algorithm in which information is distributed to a plurality of parts (divided pieces), and the information can be restored only when the parts are gathered. In the secret information distribution algorithm, although information is merely distributed into a plurality of parts without using keys, even if merely one part is obtained, the original information cannot be obtained therefrom, and leakage of information can be readily prevented even in the case of theft or lost. Such conventional secret information distribution algorithms include the following.
(1) A method called a (k, n) threshold value secret distribution method in which original data is divided into n pieces of data, and although the original data can be restored when k pieces of the divided data among them are retrieved, the original data S cannot be restored with divided data of arbitrary (k-1) or less pieces (A. Shamir, "How to Share a Secret" , Comm. Assoc. Comput. Mach., VoL 22, no. 11, pp. 612 to 613 (Nov. 1979)).
(2) As a method realized by the (k, n) threshold value secret distribution method, division and restoration of data is performed by polynomial computing (Bruce Schneier, "Applied Cryptography, John Wiley & Sons, Inc., pp. 383 to 384 (1994)).
(3) A method in which information distribution is realized by simply dividing data into pieces and rearranging them as divided data (JP2004-053969).
(4) An information distribution method in which exclusive OR (XOR) of divided original data and arbitrary random numbers is output as divided data (JP2006-018850).

However, such conventional secret information distribution algorithms have problems that, for example, calculation time taken for division or restoration is long and the size of divided data is large; therefore, they are utilized for, for example, distributing and managing keys which are used in encryption when data is encrypted, but not for division of the data per se, and they have problems that they cannot be utilized for save and management of the data per se . More specifically, the (k, n) threshold value secret distribution methods of Patent Documents 1 and 2 have a problem that the volume of divided data is same as original data since division and restoration of data is performed by polynomial computing, and, in addition, a long time is also taken for division and restoration. Moreover, the method of Patent Document 3 has a problem that it is realized merely in threshold value secret information distribution in which k=n and k=2, n=3, in other words, original data is divided into n=3 pieces of data and the original data can be restored when k=2 pieces of divided data among them are collected, although processing is high speed. Furthermore, the method of Patent Document 4 has a problem that the volume of divided data becomes same as original data as well as the methods of Patent Documents 1 and 2.

### SUMMARY OF THE INVENTION

According to the present invention to provide a data protection system, method, and program which can reduce the size of divided data, which is to be distributed and saved, and perform distributed saving and retrieval restoration at high speed.

### (System)

The present invention provides a data protection system. The data protections system of the present invention is characterized by
a data dividing unit for dividing data into n pieces;
an encoding unit for generating m pieces of encoded data composed of a set of a bitmap matrix specifying a plurality pieces of divided data for obtaining exclusive OR (XOR) and exclusive OR data including exclusive OR of the plurality pieces of divided data specified by the bitmap matrix, wherein m is equal to or more than a dividing number n and according to redundancy;
a distributed saving unit for distributing and saving the m pieces of encoded data to and in storage devices at two or more locations and m or less locations; and
a decoding unit for decoding the original data by retrieving restorable k or more pieces of the encoded data among the distributed and saved m pieces of encoded data.

Herein, the bitmap matrix of the encoding unit is a matrix which is composed of 0 and 1 bits and has at least m rows and n columns, and the encoded data including exclusive OR of two or more pieces of the divided data is generated by containing at least two 1 bits per one row.

The decoding unit retrieves at least the encoded data corresponding to the dividing number n as the restorable k or more pieces of encoded data, and decodes the n pieces of divided data by subjecting the bitmap matrix of the retrieved encoded data to conversion into a unit matrix.

Another embodiment of the data protection system according to the present invention is characterized by having
an encrypting unit for generating encrypted data by encrypting data by a key;
a data dividing unit for dividing the encrypted data and the key respectively into n pieces;
a first encoding unit for generating m pieces of first encoded data composed of a set of a bitmap matrix specifying a plurality pieces of divided data for obtaining exclusive OR and exclusive OR data including exclusive OR of the plurality pieces of divided encrypted data specified by the bitmap matrix, wherein m is equal to or more than a dividing number n;
a second encoding unit for generating m pieces of second encoded data composed of a set of the same bitmap matrix and exclusive OR data including exclusive OR of a plurality of divided keys specified by the bitmap matrix, wherein m is equal to or more than the dividing number n and according to the redundancy;
a distributed saving unit for respectively distributing and saving the m pieces of first and second encoded data to and in storage devices at two or more locations and m or less locations;
a decoding unit for decoding the encrypted data and the key by retrieving restorable k or more pieces of the first and second encoded data among the distributed and saved m pieces of first and second encoded data; and
an encryption decrypting unit for generating the original data from the restored encrypted data by use of the restored key.

Also in this case, the bitmap matrix of the encoding unit is a matrix which is composed of 0 and 1 bits and has at least m rows and n columns, and the encoded encrypted data and the encoded key including exclusive OR of two or more pieces of the divided data is generated by containing at least two 1 bits per one row.

Moreover, the decoding unit retrieves at least the encoded data corresponding to the dividing number n as the restorable k or more pieces of encoded data, and decodes the n pieces of divided encrypted data and divided keys by subjecting the bitmap matrix of the retrieved encoded data to conversion into a unit matrix.

The distributed saving unit includes, as the storage device, an external storage device such as a portable-type storage medium which is attachable/detachable with respect to a network storage, device, or equipment. The distributed saving unit changes the number of pieces of encoded data to be saved in the storage devices in accordance with storage capacities of the storage devices or needs.

### (Method)

The present invention provides a data protection method. The data protection method of the present invention is characterized by
a data dividing step of dividing data into n pieces;
an encoding step of generating m pieces of encoded data composed of a set of a bitmap matrix specifying a plurality pieces of divided data for obtaining exclusive OR and exclusive OR data including exclusive OR of the plurality pieces of divided data specified by the bitmap matrix, wherein m is equal to or more than a dividing number n and according to redundancy;
a distributed saving step of distributing and saving the m pieces of encoded data to and in storage devices at two or more locations and m or less locations; and
a decoding step of decoding the original data by retrieving restorable k or more pieces of the encoded data among the distributed and saved m pieces of encoded data.

Another embodiment of the data protection method according to the present invention is characterized by having
an encrypting step of generating encrypted data by encrypting data by a key;
a data dividing step of dividing the encrypted data and the key respectively into n pieces;
a first encoding step of generating m pieces of first encoded data composed of a set of a bitmap matrix specifying a plurality pieces of divided data for obtaining exclusive OR and exclusive OR data including exclusive OR of the plurality pieces of divided encrypted data specified by the bitmap matrix, wherein m is equal to or more than a dividing number n and according to redundancy;
a second encoding step of generating m pieces of second encoded data composed of a set of the same bitmap matrix and exclusive OR data including exclusive OR of a plurality of divided keys specified by the bitmap matrix, wherein m is equal to or more than the dividing number n;
a distributed saving step of respectively distributing and saving the m pieces of first and second encoded data to and in storage devices at two or more locations and m or less locations;
a decoding step of decoding the encrypted data and the key by retrieving restorable k or more pieces of the first and second encoded data among the distributed and saved m pieces of first and second encoded data; and
an encryption decrypting step of generating the original data from the restored encrypted data by use of the restored key.

### (Program)

The present invention provides a data protection program. The data protection program of the present invention is characterized by causing a computer to execute
a data dividing step of dividing data into n pieces;
an encoding step of generating m pieces of encoded data composed of a set of a bitmap matrix specifying a plurality pieces of divided data for obtaining exclusive OR and exclusive OR data including exclusive OR of the plurality pieces of divided data specified by the bitmap matrix, wherein m is equal to or more than a dividing number n and according to redundancy;
a distributed saving step of distributing and saving the m pieces of encoded data to and in storage devices at two or more locations and m or less locations; and
a decoding step of decoding the original data by retrieving restorable k or more pieces of the encoded data among the distributed and saved m pieces of encoded data.

Another embodiment of the data protection program according to the present invention is characterized by causing a computer to execute
an encrypting step of generating encrypted data by encrypting data by a key;
a data dividing step of dividing the encrypted data and the key respectively into n pieces;
a first encoding step of generating m pieces of first encoded data composed of a set of a bitmap matrix specifying a plurality pieces of divided data for obtaining exclusive OR and exclusive OR data including exclusive OR of the plurality pieces of divided encrypted data specified by the bitmap matrix, wherein m is equal to or more than a dividing number n and according to redundancy;
a second encoding step of generating m pieces of second encoded data composed of a set of the bitmap matrix and exclusive OR data including exclusive OR of a plurality of divided keys specified by the bitmap matrix, wherein m is equal to or more than the dividing number n and according to the redundancy;
a distributed saving step of respectively distributing and saving the m pieces of first and second encoded data to and in storage devices at two or more locations and m or less locations;
a decoding step of decoding the encrypted data and the key by retrieving restorable k or more pieces of the first and second encoded data among the distributed and saved m pieces of first and second encoded data; and
an encryption decrypting step of generating the original data from the restored encrypted data by use of the restored key.

According to the present invention, computing for generating divided data which is redundantly encoded by dividing information is merely exclusive OR (XOR); therefore, the divided data can be generated at significantly high speed.

Moreover, since the distribution number of divided data generated as the redundantly encoded data with respect to storage devices can be arbitrarily determined in accordance with needs, the divided data can be saved also in a USB memory or the like having a small storage capacity, and data protection by means of distributed saving can be readily utilized by readily ensuring a plurality of storage devices as save locations even in a domestic usage environment of a computer.

Furthermore, regarding the number of pieces of encoded data generated as divided data, m pieces are generated in accordance with redundancy with respect to the original divided data number n, and the original divided data can be restored when k pieces among them can be retrieved; therefore, it is restorable even if (m-k) pieces of data is lost due to theft or the like, and reliability of data protection is high. Naturally, even if (m-k) pieces of encoded data are stolen, the original divided data cannot be restored from the less than k pieces of encoded data, and high reliability of data protection can be ensured.

Furthermore, in the case in which encryption by means of a key is combined, when each of the encrypted data and the key is divided into redundantly encoded data and distributed and saved, data restoration and encryption decrypting after restoration cannot be performed even if part of distributed and saved encoded data is, for example, stolen; therefore, the data is doubly protected, and reliability of data protection can be improved. The above and other objects, features, and advantages of the present invention will become more apparent from the following detailed description with reference to the drawings.

### BRIEF DESCRIPTION OF THE DRAWINGS

FIG. 1 is an explanatory diagram of a usage environment of a data protection system of the present invention;
FIG. 2 is a block diagram of a functional configuration showing an embodiment of the data protection system according to the present invention;
FIG. 3 is a block diagram of a hardware environment of a computer in which a data protection program of the present embodiment is executed;
FIG. 4 is a flow chart of a data protection process according to the present embodiment;
FIGs. 5A and 5B are flow charts showing details of the encoding process of step S2 of FIG. 4;
FIG. 6 is an explanatory diagram of dividing process of saved data in the encoding process of FIG. 4;
FIG. 7 is an explanatory diagram of the bitmap matrix generated in the encoding process of FIG. 4;
FIG. 8 is an explanatory diagram of a retrieval process for the encoding process, distributed saving process, and decoding according to the present embodiment;
FIG. 9 is an explanatory diagram of the decoding process subsequent to the retrieval process of FIG. 8;
FIG. 10 is a specific explanatory diagram of the encoding process and decoding process according to the present embodiment;
FIG. 11 is an explanatory diagram of the uniform distributed save of the encoded data in the present embodiment;
FIG. 12 is an explanatory diagram of distributed save wherein encoded data in the present embodiment is changed in accordance with saved locations;
FIG. 13 is a block diagram showing another embodiment in which saved data is divided and encoded after encrypted by a key; and
FIG. 14 is a flow chart of a data protection process according to the embodiment of FIG. 13.

### DETAILED DESCRIPTION OF THE PREFERRED EMBODIMENTS

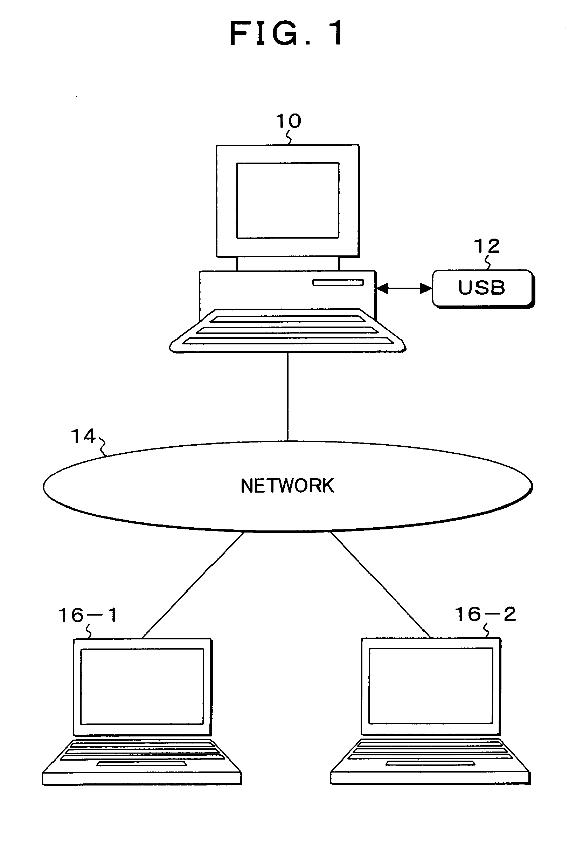

FIG. 1 is an explanatory diagram of a usage environment of a data protection system of the present invention. In FIG. 1 , a data protection program for realizing the data protection system of the present embodiment is installed in a personal computer 10 used by a user, and it is used when the user is to save an important data file. The personal computer 10 has a built-in hard disk drive, and can use a USB memory stick 12 as a portable external storage device. In addition, the personal computer 10 can be connected to network computers 16-1 and 16-2 via a network 14. The network computers 16-1 and 16-2 constitute network storages by built-in hard disk drives when viewed from the personal computer 10 of the user.

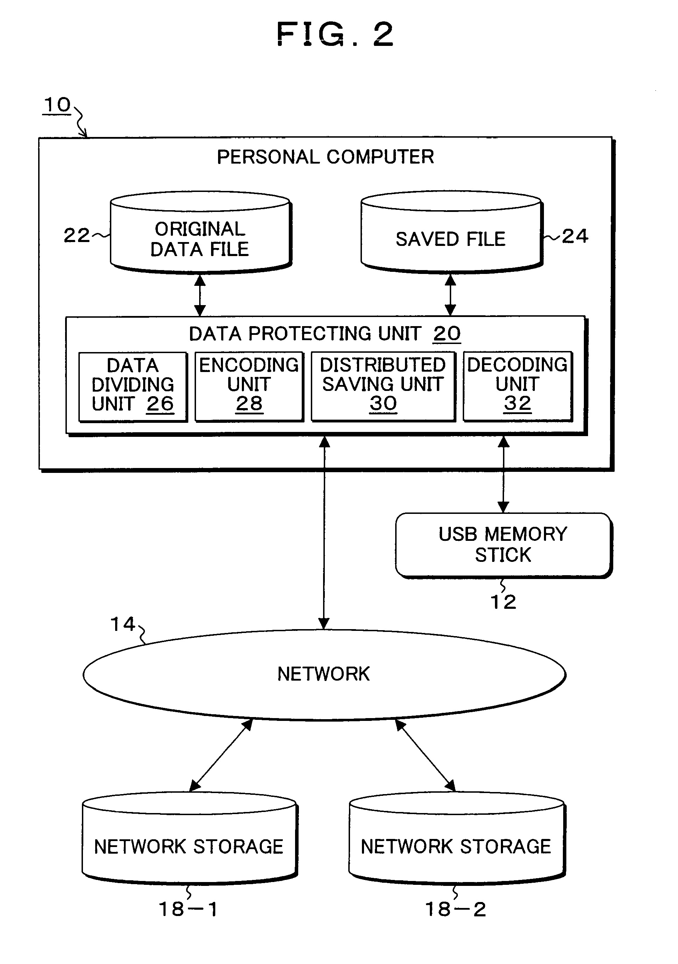

FIG. 2 is a block diagram of a functional configuration showing the embodiment of the data protection system according to the present invention. In FIG. 2, in the personal computer 10 used by the user, a data protecting unit 20 is provided as a function realized by execution of the data protection program. With respect to the data protecting unit 20, an original data file 22 storing important information to be protected and a saved file 24 which serves as one of save locations are provided. In the data protecting unit 20, a data dividing unit 26, an encoding unit 28 , a distributed saving unit 30, and a decoding unit 32 are provided. In addition, the USB memory stick 12 and network storages 18-1 and 18-2 serving as external storage devices are connected to the data protecting unit 20. The data dividing unit 26 divides data to be protected which is read from the original data file 22 into n pieces of block data. The encoding unit 28 generates m pieces of encoded data composed of a set of a bitmap matrix specifying a plurality pieces of divided block data for obtaining exclusive OR (XOR) and exclusive OR data obtained as exclusive OR of the plurality of data blocks specified by the bitmap matrix, wherein m is equal to or more than dividing number n and according to redundancy Q which is determined in advance. The distributed saving unit 30 distributes and saves the m pieces of encoded data generated by the encoding unit 28 to and in storage devices at two or more locations and m or less locations, that is, in this embodiment, the saved file 24 of the personal computer 10 per se, the detachable USB memory stick 12, and the network storages 18-1 and 18-2 connected via the network 14. The decoding unit 32 retrieves k or more restorable pieces of encoded data among the distributed and saved m pieces of encoded data and decodes the original data. Specifically, the decoding unit 32 retrieves encoded data corresponding to at least n pieces of the dividing number as the restorable k or more pieces of encoded data, and converts the bitmap matrix of the retrieved encoded data into a unit matrix, thereby decoding the m pieces of divided block data. Herein, the number of pieces of the encoded data generated by the encoding unit 28 is m which is equal to or more than the dividing number n and according to the redundancy Q, and, in this case, the redundancy Q can be represented as redundancy Q=m/n . The redundancy Q is an inverse number of an encoding rate R. In other words, the encoding rate R can be represented as encoding rate R=n/m=I/Q. The redundancy Q is a value which is equal to or larger than one, and the reliability of data protection is improved along with increase in the redundancy, however, the number of encoded data to be distributed and allocated is increased. Therefore, the balance between improvement of reliability and the number of encoded data is taken into consideration, and an optimal value of the redundancy Q is determined such that, for example, the number m of the encoded data is larger than the data dividing number n by about several percent. The distributed saving of encoded data by the distributed saving unit 30 can employ, for example, a method in which encoded data is evenly distributed and allocated to a plurality of storage devices or a method in which the number of distribution of encoded data is changed in accordance with storage capacities of storage devices or needs. For example, in the embodiment of FIG. 2, the storage capacity of the USB memory stick 12 is smaller than that of the saved file 24 and the network storages 18-1 and 18-2; therefore, regarding the m pieces of encoded data generated by the encoding unit 28, the number of encoded data corresponding to the ratio which is accounted for by the USB memory stick 12 with respect to the overall storage capacity is distributed and allocated to the USB memory stick 12. Consequently, even when storage capacities of the plurality of storage devices to which distributed saving is performed are different, the number of encoded data corresponding to each of the storage capacities can be appropriately distributed and saved.

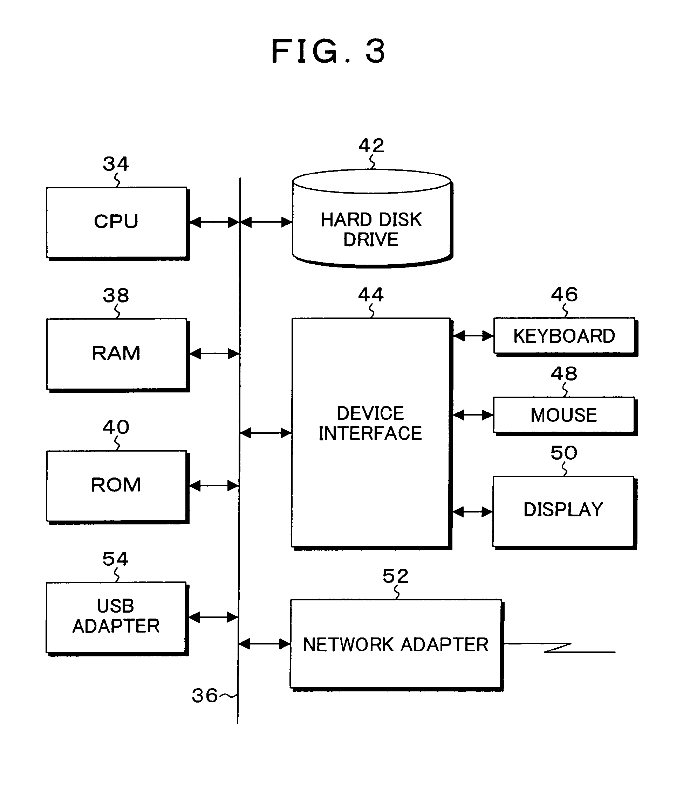

FIG. 3 is a block diagram of a hardware environment of the computer in which the data protection program of the present embodiment is executed. In FIG. 3, a RAM 38, a ROM 40, a hard disk drive 42, a device interface 44 to which a keyboard 46, a mouse 48, and a display 50 are connected, a network adapter 52, and a USB adapter 54 are connected to a bus 36 of a CPU 34. The data protection program of the present embodiment is stored in the hard disk drive 42. When the computer is activated, in a boot process by a boot-up program of the ROM 40, an OS of the hard disk drive 42 is read to the RAM 38 and executed, and then, the data protection program of the present embodiment is read from the hard disk drive 42 to the RAM 38 and executed by the CPU 34.

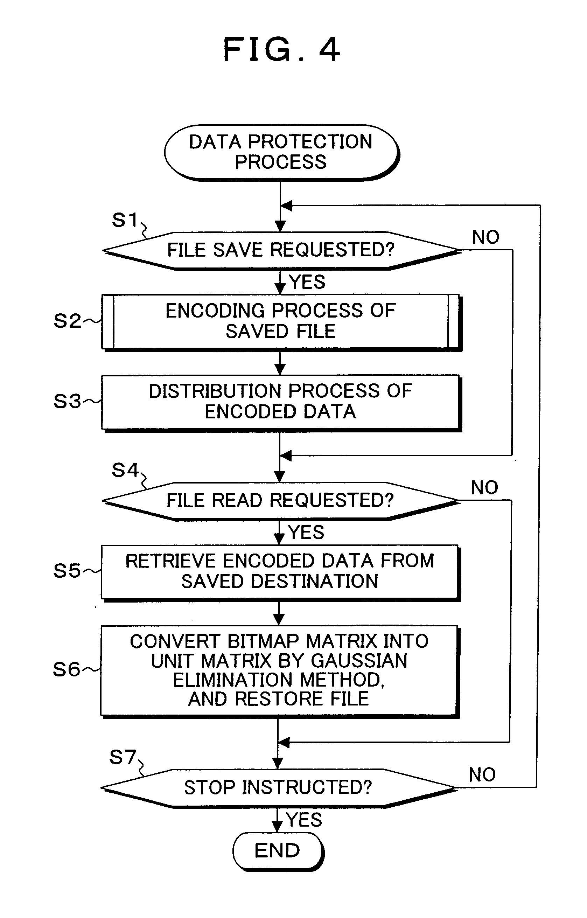

FIG. 4 is a flow chart of a data protection process according to the present embodiment. FIG. 4 will be described below with reference to FIG. 2. When a file save request is determined in step S1, the process proceeds to step S2, and an encoding process of a saved file by the data dividing unit 26 and the encoding unit 28 of FIG. 2 is executed. Subsequently, in step S3, a distribution process of the encoded data is performed by the distributed saving unit 30, and the m pieces of encoded data generated in the encoding process are distributed to and saved in the plurality of storage devices serving as save locations. Subsequently, when a file read request is determined in step S4, the encoding unit 32 retrieves the encoded data from the saved destinations in step S5 , and the bitmap matrix is converted into a unit matrix with respect to the retrieved encoded data by the Gaussian elimination method so as to restore the original file in step S6.

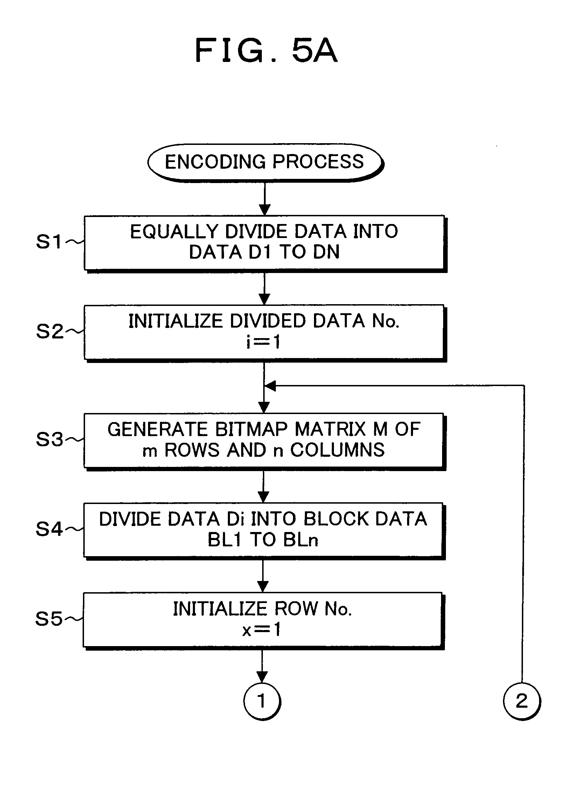

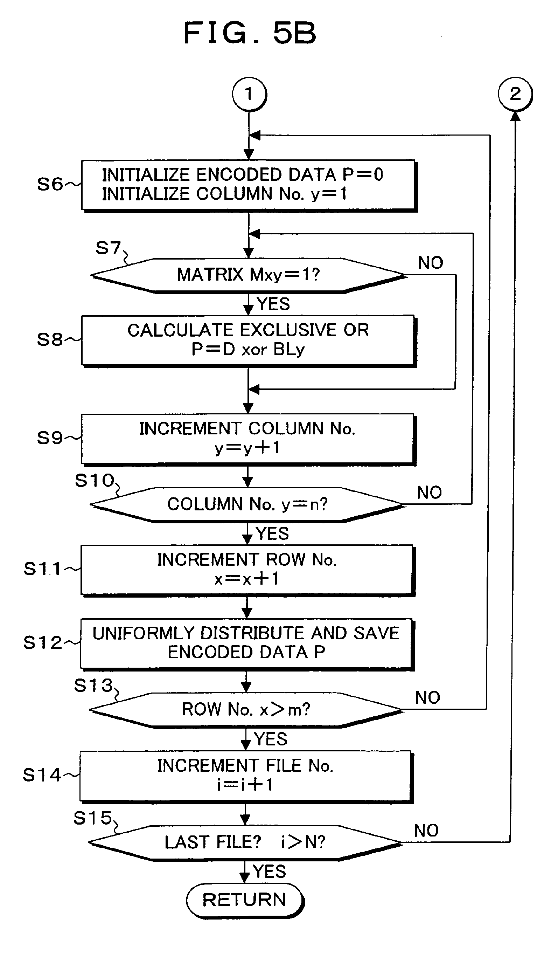

FIGs. 5A and 5B are flow charts showing details of the encoding process of step S2 of FIG. 4. In FIGs. 5A and 5B, in the encoding process, first, in step S1, the saved data to be processed is equally divided into data D1 to DN having a size suitable for the encoding process.

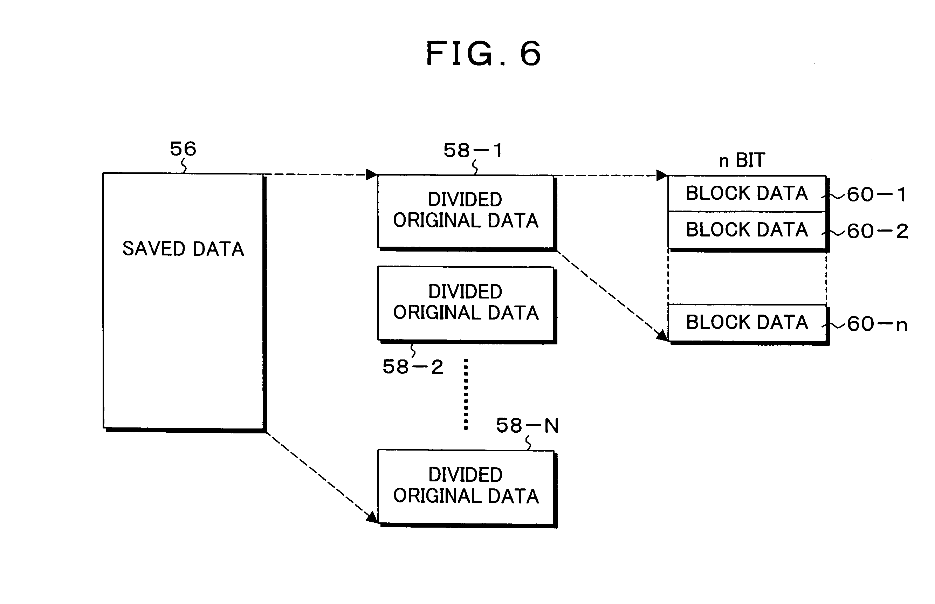

FIG. 6 is an explanatory diagram of data division of step S1 of FIGs. 5A and 5B, wherein the saved data 56 is divided into divided original data 58-1 to 58-N having a predetermined size which is required for the encoding process. Herein, the saved data 56 shows the maximum size of protection data which can be processed in the present embodiment, actual protection data is within the size of the saved data 56, and the remaining part is filled with 0 bits; therefore, N pieces of the divided original data 58-1 to 58-N are fixedly generated for data that is within the maximum size by equal division.

Referring again to FIGs. 5A and 5B, a divided data number i is then initialized to i=1 in step S2. The divided data number i is a value of i=1 to N. Next, a bitmap matrix M which is used in encoding of the present embodiment and having m rows and n columns is generated in step S3.

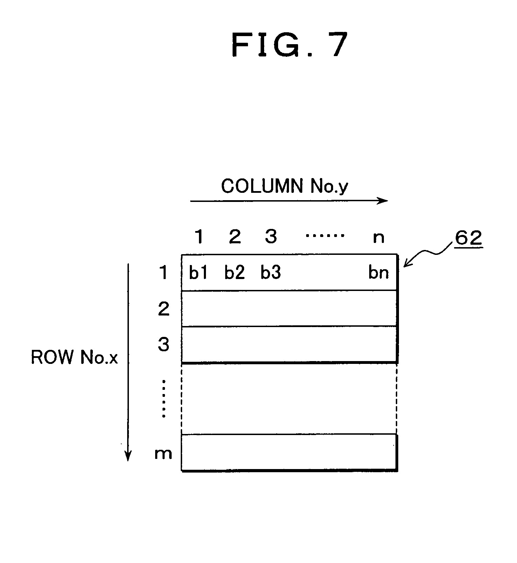

FIG. 7 is an explanatory diagram of a bitmap matrix 62 generated in step S3 of FIGs. 5A and 5B. In the present embodiment, as shown in FIG. 6, each of the divided original data 58-1 to 58-N which has been divided into N pieces from the saved data 56 is further divided into n pieces of block data 60-1 to 60-n in step S4 of FIGs. 5A and 5B, for example, like the divided original data 58-1 of FIG. 6 shown in a focused-on manner, and the bitmap matrix 62 is generated based on the block data 60-1 to 60-n and the number m of generated pieces of the encoded data which is determined by the redundancy Q. The bitmap matrix 62 has row numbers x and column numbers y; wherein the row numbers x have values of the generated number x=1 to m of the encoded data, while the column numbers y have values of y=1 to n showing the positions of the block data 60-1 to 60-n shown in FIG. 6. The bitmap matrix 62 shows positions of block data to be used in exclusive OR calculations of exclusive OR data combined with the encoded data by 1 bits of bits b1 to bn. For example, if the bitmap matrix is
b1, b2, b3 ··· bn=110···0,
exclusive OR of the first block data 60-1 and the second block data 60-2 of FIG. 6 which are indicated by the column number y and at the first bit b1 and the second bit b2 corresponding to 1 bits is calculated and obtained. As the bitmap matrix 62, an arbitrary matrix composed of 0 and 1 bits can be generated; however, if there is merely one 1 bit and all the other bits are 0, in the exclusive OR calculation, the block data per se corresponding to the 1 bit at one location is assumed as the data which has undergone an exclusive OR calculation, and, when it is distributed and saved, the block data per se is revealed even though it is partial. Therefore, in the bitmap matrix 62 in the present embodiment, a bitmap matrix which necessarily includes two or more 1 bits is generated. As a result, the XOR data contained in the encoded data is exclusive OR of two or more pieces of block data, thereby preventing part of the block data from being distributed and saved without change and the block data from being revealed to a third person upon lost, theft, etc. even though it is partial.

Referring again to FIGs. 5A and 5B, after the bitmap matrix M having m rows and n columns is generated in step S3, data Di is then divided into n pieces of block data BL1 to BLn as shown in the divided original data 58-1 of FIG. 6. Subsequently, the row number x is initialized to x=1 in step S5 . Subsequently, in step S6 , encoded data P is initialized to P=0, and the column number y is initialized to y=1. Subsequently, in step S7 , whether the bit b1 of the bitmap matrix Mxy=M11 is 1 bit or not is checked. If the bit b1 of the matrix is 1 , exclusive OR (XOR) of the block data BLx corresponding to that and the encoded data P which is initially set in step S6 is obtained and provided as new encoded data P. Meanwhile, if the matrix Mxy=M11 is 0 bit in step S7, step S8 is skipped. Then, after the column number y is incremented by one in step S9, if it is not over the last value n in step S10, the process returns to step S7 in which the next bit b2 of the matrix Mxy=M12 is 1 bit or not is checked, and, if it is 1 bit, exclusive OR (XOR) of the corresponding block data BL2 and the currently obtained encoded data P is calculated in step S8. Meanwhile, if the bit b2 specified in step S7 is 0 bit, step S8 is skipped. Such processes of steps S7 to S9 are repeated until the column number y reaches y=n in step S10; if it exceeds n, the process proceeds to step S11 in which the row number x is incremented by one; and then, in step 12, the encoded data P calculated in step S8 at this time is uniformly distributed to and saved in one of a plurality of distribution destinations which are determined in advance. For example, like FIG. 2, if there are four distribution destinations of the encoded data, i.e., the saved file 24, the USB memory stick 12, and the network storages 18-1 and 18-2, the generation number of the generated encoded data corresponds to the row number x; therefore, save locations can be sequentially specified and the encoded data can be uniformly saved by obtaining (x mod A)
with respect to the number A of save locations. Then, in step S13, whether the row number x exceeds the last value m or not is checked; if does not exceed m, the process returns to step S6; and encoding and distributed saving according to steps S6 to S12 using the bitmap matrix of the next row number x=2 is performed. When the row number x exceeds m in step S13 as a result of repeating the processes of steps S6 to S12, all encoding by means of the bitmap matrix 62 is finished. Therefore, after the process proceeds to step S14 in which the file number i is incremented by one, whether it is a last file or not, that is, whether the file number i exceeds N or not is checked in step S15; if it does not exceed that, the process returns to step S3; and generation of n pieces of encoded data according to steps S3 to S14 is repeated for the next divided original data 58-2 of FIG. 6. When encoding of the divided original data 58-N of FIG. 6 is finished, process termination of the last file is determined in step S15, and the series of encoding processes is terminated so as to return to the main routine of Fig. 4.

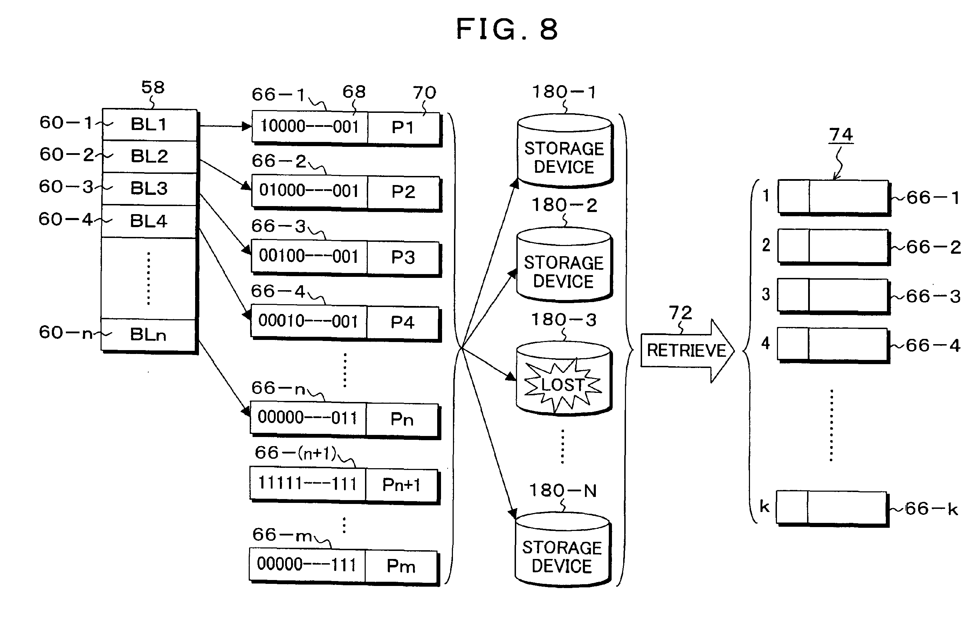

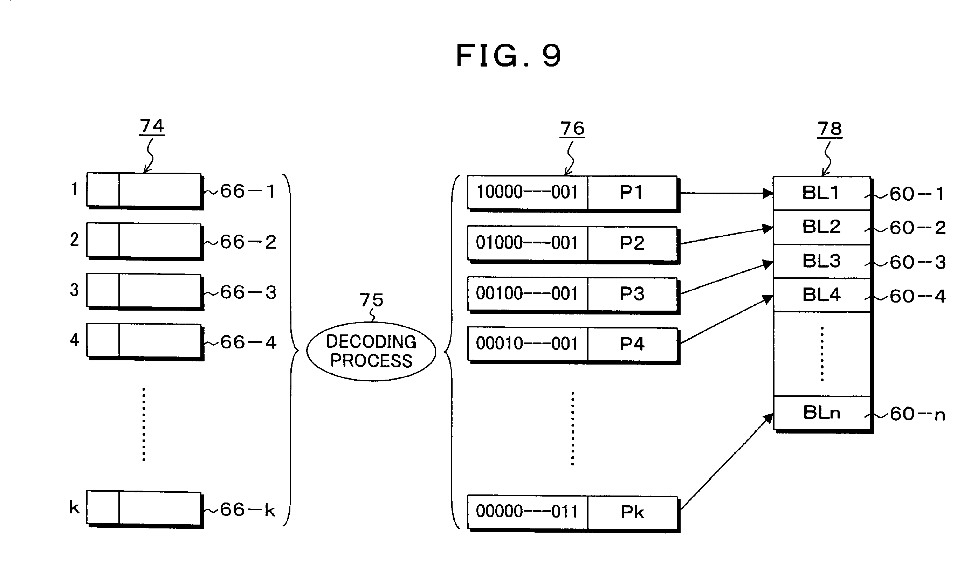

FIG. 8 is an explanatory diagram of the encoding process, distributed saving process, and retrieval process for decoding in the data protection process of the present embodiment. In the encoding process, as shown in FIG. 6, one of the data divided into N pieces serves as the divided original data 58, and the divided original data 58 is divided into n pieces of block data 60-1 to 60-n. The dividing number n is fixedly set, for example, in a manner that n=1028 and block size=1280 bytes, and, if actual data is smaller than the maximum size, the open part is filled with 0 bits so as to fixedly generate block data of dividing number n. The block data 60-1 to 60-n is converted into m pieces of the encoded data 66-1 to 66-m composed of sets with the XOR data 70 by calculations of exclusive OR of the plurality pieces of block data corresponding to 1 bits based on a bitmap 68. When the encoded data 66-1 is taken as an example, the bitmap 68 is n-bit data showing positions of the divided block data 60-1 to 60-n in the original data 58 used for calculating the XOR data 70. For example, the bitmap 68 of the encoded data 66-1 is "10000 ... 001", wherein merely one bit at the left end and the right end is "1" and all the rest is "0". Therefore, based on the bitmap 68, the encoded data 66-1 is generated when the block data 60-1 and the block data 60-n corresponding to bit 1 is selected to calculate exclusive OR (XOR), and data P1 is calculated as XOR data 70. The m pieces of encoded data 66-1 to 66-m generated in the encoding process are uniformly distributed and allocated to N units of storage devices 180-1 to 180-N serving as storage locations or distributed to and saved therein according to the number in accordance with the storage capacities or needs. The number N of the storage devices to which distributed saving is performed is a number which is N=2 or more and m or less. In decoding based on the encoded data distributed to and saved in the storage devices 180-1 to 180-N, the encoded data 66-1 to 66-k is obtained as retrieved data 74 by performing retrieval 72 of the encoded data, and the original block data 60-1 to 60-n can be decoded as decoded data 78 from the k pieces of encoded data as shown in FIG. 9.

In the decoding process in FIG. 9, when a process of conversion into a unit matrix 76 according to the Gaussian elimination method is performed for the bitmap 68 in the k pieces of encoded data 66-1 to 66-k obtained as the retrieved data 74, the block data 60-1 to 60-n can be decoded as the original block data BL1 to BLn from the values P1 to Pk added thereto and corresponding to the XOR data 70.

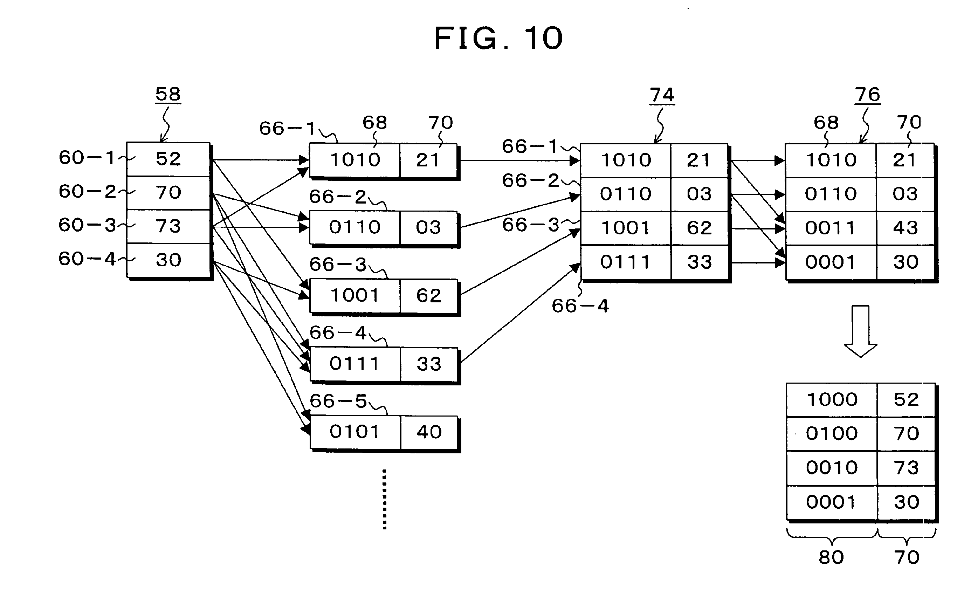

FIG. 10 specifically shows the encoding process, distributed saving process, and decoding process according to the present embodiment. In FIG. 10, the divided original data 58 is divided into, for example, two-byte block data 60-1 to 60-4. The block data 60-1 to 60-4 is, for example, "52", "70", "73", and "30" in hexadecimal.
Subsequently, encoding is performed, thereby converting it to m pieces of encoded data 66-1, 66-2, 66-3, 66-4, 66-5, ···, wherein m is determined by the redundancy Q . When the encoded data 66-1 is taken as an example, it is composed of the bitmap 68 and the XOR 70 and is 4-bit data representing the positions of divided block data 60-1 to 60-4 in the divided original data 58 used for calculating the bitmap 68 and the XOR data 70. The bitmap 68 of the encoded data is "1010", in accordance with this, the corresponding first and third block data 60-1 and 60-3 is selected from the original data 58, and exclusive OR (XOR) is obtained as
XOR=52(+)73=21
by a hexadecimal calculation, thereby obtaining "21" as the XOR data 70. The encoded data 66-1, 66-2, 66-3, 66-4, 66-5, ··· converted in this manner is distributed to and stored in a plurality of storage devices serving as save locations; and, when a read request is received thereafter, for example, the four pieces of encoded data 66-1 to 66-4 are retrieved as the retrieved data 74 which is necessary for decoding. In the decoding process, when the bitmap 68 in the four pieces of encoded data 66-1 to 66-4 obtained as the retrieved data 74 is subjected to a process of the unit matrix data 76 according to the Gaussian elimination method so as to obtain a unit matrix 80, "52" , " 70" , "73", and "30" which are values of the original block data 60-1 to 60-4 can be decoded from the XOR data 70 added to the unit matrix 80. Herein, for example, even if the storage device 180-3 is lost due to theft or the like and lost of the encoded data is caused like FIG. 8 upon the decoding process of FIG. 4, as long as k pieces of encoded data can be retrieved like FIG. 9, the original block data 60-1 to 60-n can be decoded by the unit matrix data 76 of the bitmap. In actual devices, a storage device which is anticipated to lose data due to theft or the like is, for example, the USB memory stick 12 in the system environment of FIG. 1 which has the highest possibility to encounter lost or theft; therefore, in consideration of the encoded data lost by the USB memory stick 12, m pieces of encoded data which exceeds the dividing number n of the block data by about several percent are generated, distributed, and stored. Accordingly, even if, for example, the USB memory stick 12 is lost by theft, lost, or the like, the original data can be decoded by retrieving k pieces of encoded data from storage devices other than that. On the other hand, regarding the encoded data saved in the USB memory stick 12, for example, less than k pieces of encoded data are merely saved, and the saved data in the USB memory stick 12 is below the k pieces necessary for restoration; therefore, even if the encoded data of the USB memory stick 12 is illicitly obtained by a third person, the original divided data cannot be restored. Moreover, since every piece of the encoded data is obtained from exclusive OR of at least two pieces of block data, the XOR data per se contained in the encoded data does not shows part of the original data, and even a part of the original data cannot be known.

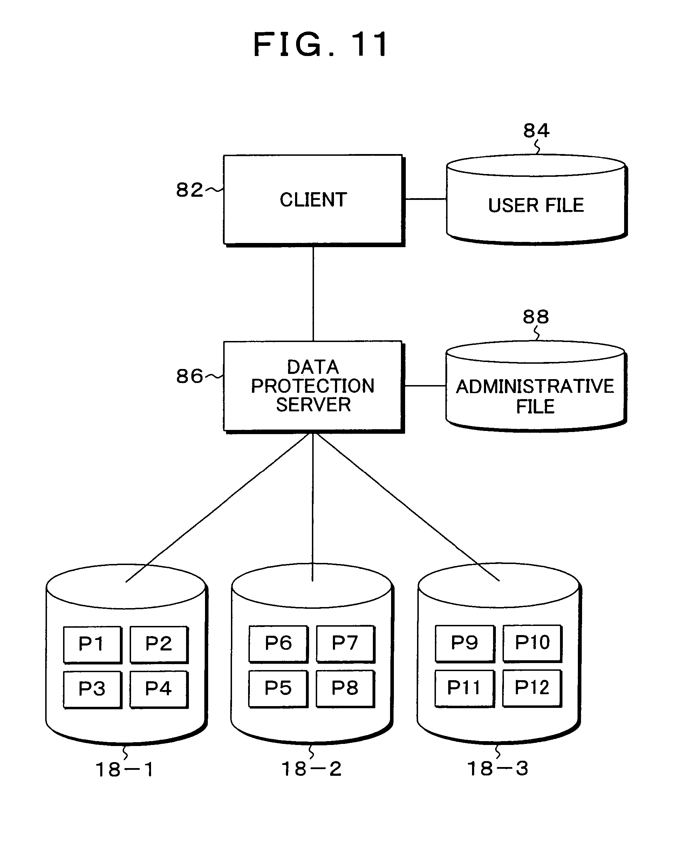

FIG. 11 is an explanatory diagram of uniform distributed save of the encoded data in the present embodiment. In FIG. 11, a client 82 used by a use has a user file 84, the client 82 can access a data protection server 86, and the data protection program according to the present embodiment is installed in the data protection server 86. In other words, the function same as the data protecting unit 20 shown in the personal computer 10 of FIG. 2 is provided in the data protection server 86. When the data protection server 86 receives a save request of the user file from the client 82, it executes dividing and encoding processes of the user file data by the data dividing unit 26 and the encoding unit 28 of the data protecting unit 20 of FIG. 2, and then, uniformly distribute and save, for example, four of twelve pieces of encoded data P1 to P12 to, for example, each of the network storages 18-1 to 18-3 serving as save locations by the distributed saving unit 30. In this course, the encoded data is not saved in the data protection server 86 per se, and merely administrative information such as the addresses of the network storages 18-1 to 18-3 serving as save destinations and the number of saved encoded data is stored in an administrative file 88. Therefore, when a file read request from the client 82 is received, the data protection server 86 references the administrative file 88, specifies the network storages 18-1 to 18-3 serving as save destinations, retrieves and decodes k pieces of encoded data which are necessary for restoration, and makes a response to the client 82.

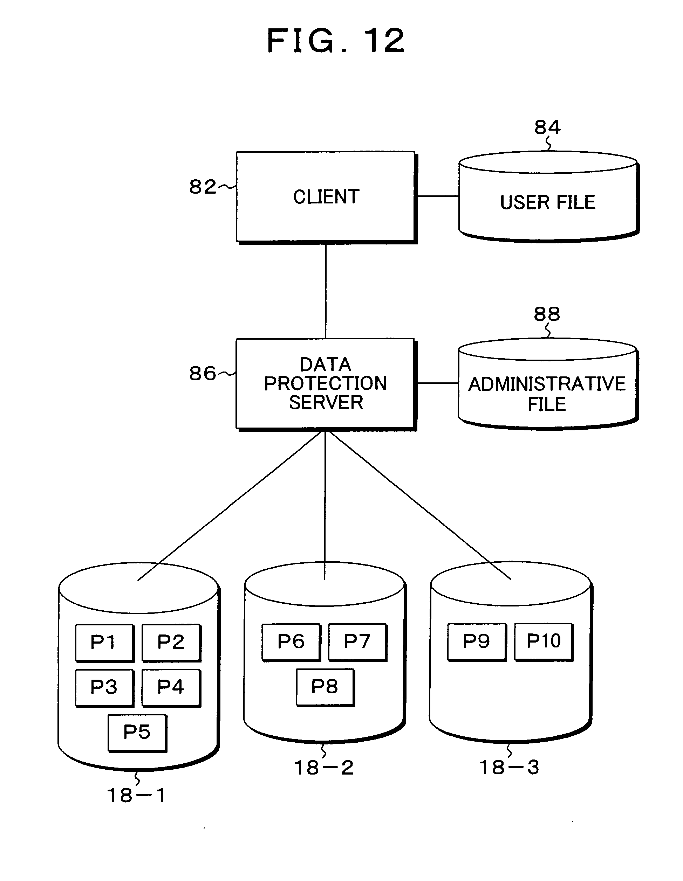

FIG. 12 is an explanatory diagram of distributed save in which the encoded data in the present embodiment is changed in accordance with save locations. In FIG. 12, in accordance with, for example, the storage capacities of the network storages 18-1 to 18-3 or needs, the data protection server 86 determines the saved number of, for example, m=10 pieces of encoded data P1 to P10 such that, for example, five pieces are for the network storage 18-1, three pieces are for the network storage 18-2, and two pieces are for the network storage 18-3. Herein, restoration by the protection server 86 can be performed when k=7 pieces of the encoded data can be retrieved among the m=10 pieces of encoded data. In such a case, even if either one of the network storage 18-2 and 18-3 among the three network storages 18-1 to 18-3 becomes unretrievable, restoration can be performed by the data protection server 86. More specifically, even if the three pieces of encoded data P6 to P8 of the network storage 18-2 cannot be retrieved, the original divided data can be restored by retrieving seven pieces of encoded data P1 to P5 and P9 to P10 from the network storages 18-1 to 18-3. Also, even if the encoded data P9 to P10 of the network storage 18-3 cannot be retrieved, the original divided data can be restored by retrieving eight encoded data P1 to P5 and P6 to P8 from the network storages 18-1 to 18-2. On the other hand, if the encoded data of the network storage 18-1 cannot be retrieved, no more than five pieces of encoded data P6 to P10 are retrieved from the remaining network storages 18-2 and 18-3, and they do not reach restorable k=7 pieces; therefore, the original data cannot be restored.

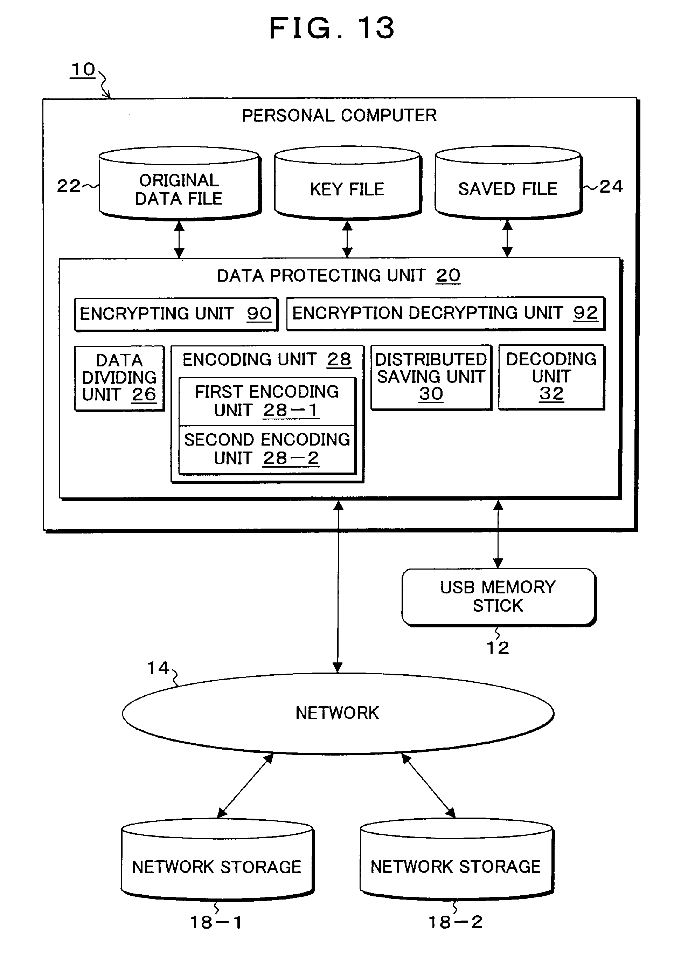

FIG. 13 is a block diagram showing another embodiment for dividing and encoding saved data after encrypting it by a key. In FIG. 13, in the data protecting unit 20 of the personal computer 10, in addition to the data dividing unit 26, the encoding unit 28, the distributed saving unit 30, the decoding unit 32 in the embodiment of FIG. 2, an encrypting unit 90 and an encryption decrypting unit 92 are further provided. In addition, in the encoding unit 28, functions of a first encoding unit 28-1 and a second encoding unit 28-2 are provided. The encrypting unit 90 encrypts the data of the file which is read from the original data file 22 and to be saved, thereby generating encrypted data. The data dividing unit 26 divides each of the encrypted data generated by the encrypting unit 90 and the key used in encryption into n pieces of block data. The first encoding unit 28-1 provided in the encoding unit 28 encodes the encrypted data. Also, the second encoding unit 28-2 encodes the key. More specifically, the first encoding unit 28-1 generates m pieces of first encoded data composed of a set of a bitmap matrix specifying a plurality pieces of divided data for obtaining exclusive OR and exclusive OR data including the exclusive OR of the plurality pieces of divided encrypted data specified by the bitmap matrix, wherein m is according to the redundancy Q which is equal to or more than the dividing number n. The second encoding unit 28-2 generates m pieces of second encoded data composed of a set of the same bitmap matrix and exclusive OR data including exclusive OR of a plurality of divided keys specified by the bitmap matrix, wherein m is according to the redundancy Q which is equal to or more than the dividing number n. The distributed saving unit 30 respectively distributes and saves the m pieces of first encoded data and second encoded data generated in the encoding unit 28 to and in storage devices at two or more locations and m or less locations, for example, the saved file 24, the USB memory stick 12, the network storages 18-1 and 18-2. The decoding unit 32 respectively retrieves restorable k or more pieces of the first encoded data and the second encoded data among the distributed and saved m pieces of first encoded data and second encoded data, and decodes the encrypted data and key. Specifically, the decoding unit 32 retrieves restorable k or more pieces of first data and second data and converts the bitmap matrix of the retrieved first encoded data and the second encoded data into a unit matrix, thereby decoding the m pieces of divided encrypted data and divided keys. The encryption decrypting unit 92 generates the original data from the restored encrypted data by use of the restored key. An encryption algorithm used in this embodiment may use an arbitrary encryption algorithm such as DES or AES of common key encryption methods or RSA of a public key encryption method.

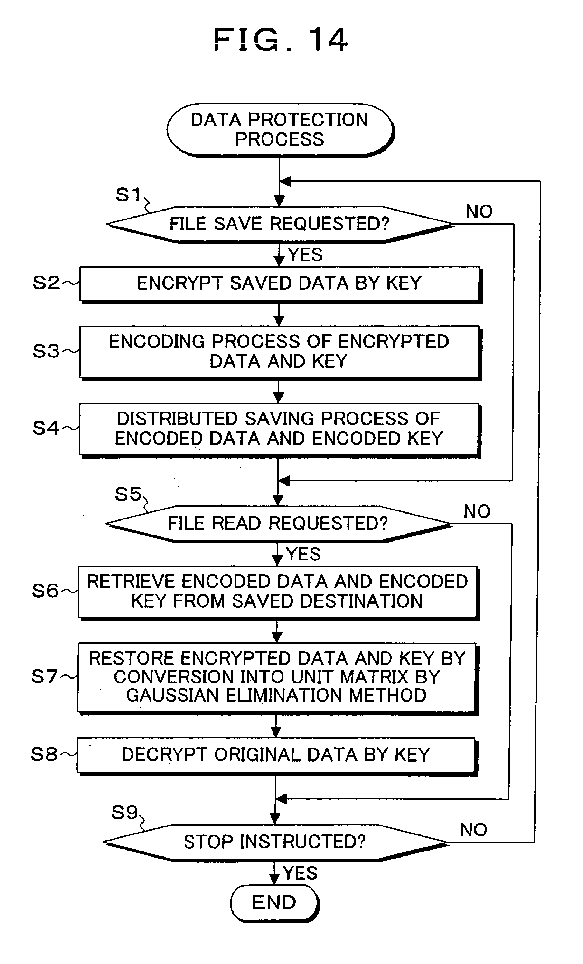

FIG. 14 is a flow chart of a data protection process according to the embodiment of FIG. 13. In FIG. 14, when a file save request is determined in step S1 , the process proceeds to step S2 in which saved data is encrypted by a key, and then, the encoding process of the encrypted data and key is performed in step S3. Subsequently, in step S4, the distributed saving process of the encoded data and the encoded key is performed in step S4. Meanwhile, when a file read request is determined in step S5, after the encoded data and the encoded key is retrieved from the saved destinations in step S6, the encrypted data and key are restored by respectively performing conversion into a unit matrix according to the Gaussian elimination method in step S7 , and, furthermore, the original data is decrypted from the encrypted data by the restored key in step S8. Such processes of steps S1 to S8 are repeated until there is a stop instruction in step S9. The saved data shown in the embodiment of FIG. 13 and FIG. 14 is encrypted by a key, and the encrypted data and the key are respectively encoded, distributed, and saved; consequently, double protection is applied to the distributed and saved encoded data since it is encrypted in addition to redundant encoding according to the present embodiment; and, even if a storage device of save destinations is lost due to theft or the like, it is almost impossible to restore the original data from the lost data, and secrecy and reliability of data protection by distributed saving can be further improved. In addition, the present invention provides the data protection programs executed by the computers, and the data protection programs have the processing contents shown in flow charts of FIG. 4, FIG. 5A, FIG. 5B and FIG. 14. In addition, the present invention provides computer-readable recording media recording the data protection programs of the present embodiments. The recording media includes portable-type storage media such as CD-ROMs, floppy disks, DVD disks, magneto-optical disks, and IC cards; storage devices such as hard disk drives provided inside and outside computer systems; databases for retaining programs via lines or another computer system and databases thereof; and transmission media on lines. It should be noted that the present invention includes arbitrary modifications that do not impair the object and advantages thereof, and is not limited by the numerical values shown in the above described embodiments.

## Claims

1. A data protection system **characterized by**
a data dividing unit for dividing data into n pieces;
an encoding unit for generating m pieces of encoded data composed of a set of a bitmap matrix specifying a plurality pieces of divided data for obtaining exclusive OR and exclusive OR data including exclusive OR of the plurality pieces of divided data specified by the bitmap matrix, wherein m is equal to or more than a dividing number n and according to redundancy;
a distributed saving unit for distributing and saving the m pieces of encoded data to and in storage devices at two or more locations and m or less locations; and
a decoding unit for decoding the original data by retrieving restorable k or more pieces of the encoded data among the distributed and saved m pieces of encoded data.

2. The data protection system according to claim 1 **characterized in that** the bitmap matrix of the encoding unit is a matrix which is composed of 0 and 1 bits and has at least m rows and n columns, and the encoded data including exclusive OR of two or more pieces of the divided data is generated by containing at least two 1 bits per one row.

3. The data protection system according to claim 1 **characterized in that** the decoding unit retrieves at least the encoded data corresponding to the dividing number n as the restorable k or more pieces of encoded data, and decodes the n pieces of divided data by subjecting the bitmap matrix of the retrieved encoded data to conversion into a unit matrix.

4. A data protection system **characterized by** having
an encrypting unit for generating encrypted data by encrypting data by a key;
a data dividing unit which divides the encrypted data and the key respectively into n pieces;
a first encoding unit which generates m pieces of first encoded data composed of a set of a bitmap matrix specifying a plurality pieces of divided data for obtaining exclusive OR and exclusive OR data including exclusive OR of the plurality pieces of divided encrypted data specified by the bitmap matrix, wherein m is equal to or more than a dividing number n;
a second encoding unit which generates m pieces of second encoded data composed of a set of the bitmap matrix and exclusive OR data including exclusive OR of a plurality of divided keys specified by the bitmap matrix, wherein m is equal to or more than the dividing number n and according to the redundancy;
a distributed saving unit which respectively distributes and saves the m pieces of first and second encoded data to and in storage devices at two or more locations and m or less locations;
a decoding unit which decodes the encrypted data and the key by retrieving restorable k or more pieces of the first and second encoded data among the distributed and saved m pieces of first and second encoded data; and
an encryption decrypting unit whick generates the original data from the restored encrypted data by use of the restored key.

5. The data protection system described in claim 4 , **characterized in that** the bitmap matrix of the encoding unit is a matrix which is composed of 0 and 1 bits and has at least m rows and n columns, and the encoded encrypted data and the encoded key including exclusive OR of two or more pieces of the divided data is generated by containing at least two 1 bits per one row.

6. The data protection system described in claim 4, **characterized in that** the decoding unit retrieves at least the encoded data corresponding to the dividing number n as the restorable k or more pieces of encoded data, and decodes the n pieces of divided encrypted data and divided keys by subjecting the bitmap matrix of the retrieved encoded data to conversion into a unit matrix.

7. The data protection system according to claim 1 or 4, **characterized in that** the distributed saving unit includes, as the storage device, an external storage device such as a portable-type storage medium which is attachable/detachable with respect to a network storage, device, or equipment.

8. The data protection system according to claim 1, **characterized in that** the distributed saving unit changes the number of pieces of encoded data to be saved in the storage devices in accordance with storage capacities of the storage devices or needs.

9. The data protection system according to claim 4, **characterized in that** the distributed saving unit changes the number of pieces of encoded data to be saved in the storage devices in accordance with storage capacities of the storage devices or needs.

10. A data protection method **characterized by**
a data dividing step of dividing data into n pieces;
an encoding step of generating m pieces of encoded data composed of a set of a bitmap matrix specifying a plurality pieces of divided data for obtaining exclusive OR and exclusive OR data including exclusive OR of the plurality pieces of divided data specified by the bitmap matrix, wherein m is equal to or more than a dividing number n and according to redundancy;
a distributed saving step of distributing and saving the m pieces of encoded data to and in storage devices at two or more locations and m or less locations; and
a decoding step of decoding the original data by retrieving restorable k or more pieces of the encoded data among the distributed and saved m pieces of encoded data.

11. The data protection method according to claim 10 **characterized in that** the bitmap matrix in the encoding step is a matrix which is composed of 0 and 1 bits and has at least m rows and n columns, and the encoded data including exclusive OR of two or more pieces of the divided data is generated by containing at least two 1 bits per one row.

12. The data protection method according to claim 10 **characterized in that**, in the decoding step, at least the encoded data corresponding to the dividing number n is retrieved as the restorable k or more pieces of encoded data, and the n pieces of divided data are decoded by subjecting the bitmap matrix of the retrieved encoded data to conversion into a unit matrix.

13. A data protection method **characterized by** having
an encrypting step of generating encrypted data by encrypting data by a key;
a data dividing step of dividing the encrypted data and the key respectively into n pieces;
a first encoding step of generating m pieces of first encoded data composed of a set of a bitmap matrix specifying a plurality pieces of divided data for obtaining exclusive OR and exclusive OR data including exclusive OR of the plurality pieces of divided encrypted data specified by the bitmap matrix, wherein m is equal to or more than a dividing number n and according to redundancy;
a second encoding step of generating m pieces of second encoded data composed of a set of the bitmap matrix and exclusive OR data including exclusive OR of a plurality of divided keys specified by the bitmap matrix, wherein m is equal to or more than the dividing number n;
a distributed saving step of respectively distributing and saving the m pieces of first and second encoded data to and in storage devices at two or more locations and m or less locations;
a decoding step of decoding the encrypted data and the key by retrieving restorable k or more pieces of the first and second encoded data among the distributed and saved m pieces of first and second encoded data; and
an encryption decrypting step of generating the original data from the restored encrypted data by use of the restored key.

14. The data protection method according to claim 13 , **characterized in that** the bitmap matrix in the encoding step is a matrix which is composed of 0 and 1 bits and has at least m rows and n columns, and the encoded encrypted data and the encoded key including exclusive OR of two or more pieces of the divided data is generated by containing at least two 1 bits per one row.

15. The data protection method according to claim 13 , **characterized in that**, in the decoding step, at least the encoded data corresponding to the dividing number n is retrieved as the restorable k or more pieces of encoded data, and the n pieces of divided encrypted data and divided keys are decoded by subjecting the bitmap matrix of the retrieved encoded data to conversion into a unit matrix.

16. The data protection method according to claim 10 or 13, **characterized in that** the distributed saving step includes, as the storage device, an external storage device such as a portable-type storage medium which is attachable/detachable with respect to a network storage, device, or equipment.

17. The data protection method according to claim 10, **characterized in that**, in the distributed saving step, the number of pieces of encoded data to be saved in the storage devices is changed in accordance with storage capacities of the storage devices or needs.

18. The data protection method according to claim 13, **characterized in that**, in the distributed saving step, the number of pieces of encoded data to be saved in the storage devices is changed in accordance with storage capacities of the storage devices or needs.

19. A computer-readable storage medium which stores a data protection program **characterized by** causing a computer to execute
a data dividing step of dividing data into n pieces;
an encoding step of generating m pieces of encoded data composed of a set of a bitmap matrix specifying a plurality pieces of divided data for obtaining exclusive OR and exclusive OR data including exclusive OR of the plurality pieces of divided data specified by the bitmap matrix, wherein m is equal to or more than a dividing number n and according to redundancy;
a distributed saving step of distributing and saving the m pieces of encoded data to and in storage devices at two or more locations and m or less locations; and
a decoding step of decoding the original data by retrieving restorable k or more pieces of the encoded data among the distributed and saved m pieces of encoded data.

20. The data protection program according to claim 19 **characterized in that** the bitmap matrix in the encoding step is a matrix which is composed of 0 and 1 bits and has at least m rows and n columns, and the encoded data including exclusive OR of two or more pieces of the divided data is generated by containing at least two 1 bits per one row.

21. The data protection program according to claim 19 **characterized in that**, in the decoding step, at least the encoded data corresponding to the dividing number n is retrieved as the restorable k or more pieces of encoded data, and the n pieces of divided data are decoded by subjecting the bitmap matrix of the retrieved encoded data to conversion into a unit matrix.

22. A computer-readable storage medium which stores a data protection program **characterized by** causing a computer to execute
an encrypting step of generating encrypted data by encrypting data by a key;
a data dividing step of dividing the encrypted data and the key respectively into n pieces;
a first encoding step of generating m pieces of first encoded data composed of a set of a bitmap matrix specifying a plurality pieces of divided data for obtaining exclusive OR and exclusive OR data including exclusive OR of the plurality pieces of divided encrypted data specified by the bitmap matrix, wherein m is equal to or more than a dividing number n and according to redundancy;
a second encoding step of generating m pieces of second encoded data composed of a set of the bitmap matrix and exclusive OR data including exclusive OR of a plurality of divided keys specified by the bitmap matrix, wherein m is equal to or more than the dividing number n;
a distributed saving step of respectively distributing and saving the m pieces of first and second encoded data to and in storage devices at two or more locations and m or less locations;
a decoding step of decoding the encrypted data and the key by retrieving restorable k or more pieces of the first and second encoded data among the distributed and saved m pieces of first and second encoded data; and
an encryption decrypting step of generating the original data from the restored encrypted data by use of the restored key.
